(19) Europäisches Patentamt
European Patent Office
Office européen des brevets

(11) **EP 1 440 860 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
***B60T 8/172*** *(2006.01)*

(21) Anmeldenummer: **03023066.8**

(22) Anmeldetag: **14.10.2003**

(54) **Fahrzeuggeschwindigkeitsermittlung**

Determination of vehicle speed

Détermination de la vitesse d'un véhicule

(84) Benannte Vertragsstaaten:
**DE FR GB**

(30) Priorität: **23.01.2003 DE 10302517**

(43) Veröffentlichungstag der Anmeldung:
**28.07.2004 Patentblatt 2004/31**

(73) Patentinhaber: **ROBERT BOSCH GMBH**
**70442 Stuttgart (DE)**

(72) Erfinder:
• **Mueller, Elmar**
**71706 Markgroeningen (DE)**
• **Walter, Frank**
**74232 Abstatt (DE)**

(56) Entgegenhaltungen:
DE-A- 3 909 589    DE-A- 3 916 513
DE-A- 4 024 815    DE-A- 19 519 767
DE-A- 19 805 091

## Beschreibung

Stand der Technik

Die Erfindung betrifft ein Verfahren und eine Vorrichtung zur Ermittlung einer die Längsbewegung eines Fahrzeugs repräsentierenden Bewegungsgröße.

Aus dem Stand der Technik sind Systeme zur Ermittlung einer Fahrzeuggeschwindigkeit bekannt, bei denen die Fahrzeuggeschwindigkeit anhand unterschiedlicher Parameter bestimmt wird. Die gängigsten Systeme verwenden dabei Raddrehzahlinformationen, wie sie beispielsweise bei automatischen Bremssystemen erfasst werden.

So ist aus der DE 195 27 531 C2 ein System bekannt, bei dem die Geschwindigkeit für ein allradgetriebenes Fahrzeug mit Längsbeschleunigungssensor ermittelt wird. Dabei wird der Beschleunigungswert, der mit Hilfe des Längsbeschleunigssensors gewonnen wird, mit der Beschleunigung eines geeigneten (langsamstes oder schnellstes, je nach Situation) Rades verglichen und entschieden, ob die Extrapolation der Geschwindigkeit mit dem Längsbeschleunigungssignal oder mit der Radbeschleunigung für die Bestimmung einer Fahrzeugreferenzgeschwindigkeit verwendet werden soll.

Eine weitere gängige Methode zur Bestimmung der Fahrzeuggeschwindigkeit besteht darin, durch eine geeignete Betrachtung der Geschwindigkeitsinformationen der Räder auf eine Fahrzeugreferenzgeschwindigkeit zu schließen. So wird beispielsweise in der DE 38 33 212 A1 eine Bildung einer Referenzgröße für die Fahrzeuggeschwindigkeit außerhalb der Bremsdruckregelung beschrieben. Dabei wird im wesentlichen ausgehend von den Geschwindigkeiten der beiden angetriebenen Räder eine gemittelte Radgeschwindigkeit ermittelt, wobei bei erfolgter Bremsdruckabsenkung eine Begrenzung der Referenzsteigung auf physikalisch mögliche Werte vorgenommen wird.

Weiterhin ist aus der DE 25 58 712 A1 ein Verfahren bekannt, mit dessen Hilfe unter Verwendung der Radgeschwindigkeiten eines gebremsten Fahrzeugs eine der Fahrzeuggeschwindigkeit angenäherte Bezugsgröße zu gewinnen und diese Bezugsgröße bei der Radschlupfermittlung zu verwenden.

Ein Verfahren zur Ermittlung der Fahrzeuggeschwindigkeit im ABS- und ASR-Fall wird in der DE 39 09 589 A1 beschrieben. Dabei werden neben den Radgeschwindigkeiten $v_{Ri}$ die Bremsdrücke $p_i$ oder die Bremsmomente $M_{Bi}$ bzw. die Antriebsmomente erfasst. Die Fahrzeuggeschwindigkeit zum Zeitpunkt k wird dabei aus der zum Zeitpunkt (k-1) ermittelten Fahrzeuggeschwindigkeit, einem Korrekturfaktor, der die Summen der zu den Zeitpunkten (k-1) und k gemessenen Radgeschwindigkeitsdifferenzen ($v_{Ri}$(k-1) - $v_{Ri}$(k)) und der Summe der für den Zeitpunkt k ermittelten Bremsmomente $M_{Bi}$(k)-$p_i$(k) ermittelt wird.

Aus der DE 195 19 767 A1 ist ein Verfahren zur Erzeugung eines Referenzgeschwindigkeitssignals eines mit einer Blockier- und/oder Schleuderschutzvorrichtung versehenen Fahrzeugs bekannt. Dabei wird das Referenzgeschwindigkeitssignal durch eine erste Größe und eine zweite Größe erzeugt, wobei die erste Größe die Radumdrehungsgeschwindigkeiten aller bremsbaren Räder und die zweite Größe die Bremsdrücke aller bremsbaren Räder repräsentiert. Weiterhin ist vorgesehen, dass die zweite Größe mit einem einen fahrzeugspezifischen Wert entsprechenden Faktor $\alpha_2$ multipliziert wird.

Aus der DE 198 05 091 A1 ist ein Verfahren zur Ermittlung der Verzögerung eines Kraftfahrzeugs bekannt. Dabei wird als erste Größe die Differenz aus der Gesamtverzögerung des Fahrzeugs du den Verzögerungen durch den Motor, den Wind, die Reibung und die Hangneigung bestimmt. Als zweite Größe wird ein Produkt der Anpreßkräfte der Fahrzeugbremse mit einem temperatur- und beladungsabhängigen Proportionalitätsfaktor gebildet. Schlussendlich dient das Verhältnis beider Werte als Parameter für die Korrektur des Proportionalitätsfaktors.

Vorteile der Erfindung

Mit der vorliegenden Erfindung gemäß Anspruch 1 und 6 wird ein Verfahren und eine Vorrichtung beschrieben, mit deren Hilfe eine die Längsbewegung eines Fahrzeugs repräsentierende Bewegungsgröße, wie beispielsweise eine Fahrzeuggeschwindigkeit oder eine Fahrzeugverzögerung, ermittelt werden kann. Dabei wird vorausgesetzt, dass das Fahrzeug mit einem Bremssystem ausgestattet ist. Dabei kann es sich beispielsweise auch um ein automatisches Bremssystem, wie es durch ein Antiblockiersystem (ABS) und/oder ein elektronisches Stabilisationsprogramm (ESP) aus den Stand der Technik bekannt ist, handeln. Weiterhin ist vorgesehen, dass beim Betrieb des Bremssystems wenigstens ein erster und ein zweiter Radzustand des Rades erkannt wird, und zwar eine Stabilitätsphase und eine Instabilitätsphase, wobei ein Radzustand beispielsweise durch das Bewegungsverhalten des Rades definiert werden kann. Dabei können beispielsweise als Bewegungsgröße eine Längsgeschwindigkeit des Fahrzeugs, eine Fahrzeugverzögerung oder sonstige die Bewegung des Fahrzeugs repräsentierende Größe erfasst werden. Besonders vorteilhaft an der Erfindung ist, dass keine zusätzlichen Bauelemente bzw. Komponenten (Sensoren) nötig sind, um eine die Fahrzeuggeschwindigkeit repräsentierende Größe zu bestimmen.

Vorteilhafterweise wird während des Betriebs des Bremssystems eine Betriebsgröße erfasst. Dabei kann es sich sowohl um eine Betriebsgröße des Bremssystems, als auch um eine Betriebsgröße des Fahrzeugbetriebs beispielsweise des Rades handeln. Besonders vorteilhaft ist, dass die Erkennung des ersten und zweiten Radzustands in Abhängigkeit von dieser erfassten Betriebsgröße erfolgt. Als Betriebsgröße zur Unterscheidung des ersten und zweiten Radzustands eignet sich beispielsweise eine die Raddynamik repräsentierende Größe. So kann mit der Betriebsgröße die Radverzögerung, der Radschlupf und/oder der Kraftschluss zwischen Rad und Fahrbahn, die Veränderung der Drehgeschwindigkeit eines Rades oder das Schlupfverhalten des Rades erfasst werden.

Vorteilhafterweise werden im ersten Radzustand wenigstens zwei Bewegungsgrößen ermittelt, die auf unterschiedliche Weise, beispielsweise durch unterschiedliche Verfahren oder Bestimmungsvorschriften, gebildet werden. Dabei ist vorgesehen, dass wenigstens eine der ermittelten Bewegungsgrößen im ersten Radzustand vom Bremsdruck abhängt. Um eine Abgrenzung gegenüber der ersten Bewegungsgröße zu erreichen kann die zweite Bewegungsgröße beispielsweise von einer die Raddrehzahl eines Rades repräsentierenden Raddrehzahlgröße abhängen.

Eine Weiterbildung der Erfindung sieht vor, dass die Bewegungsgröße, insbesondere während des ersten Radzustands, auf wenigstens zwei Arten erfasst wird. Die Bestimmung der Bewegungsgröße erster Art erfolgt in Abhängigkeit wenigstens einer Raddrehzahlgröße, die die Raddrehzahl eines Rades repräsentiert, wohingegen die Bewegungsgröße zweiter Art in Abhängigkeit wenigstens eines Bremsdrucks einer Radbremse erfolgt. Darüber hinaus ist insbesondere vorgesehen, dass nach der Bildung der Bewegungsgröße erster Art ein Vergleich der Bewegungsgrößen erster und zweiter Art erfolgt. In einer vorteilhaften Varianten der Erfindung wird als Bewegungsgröße die Fahrzeugverzögerung erfasst.

In einer besonderen Ausgestaltungsform der Erfindung ist vorgesehen, im zweiten Radzustand eine Fahrzeugverzögerung dritter Art zu erfassen. Diese Fahrzeugverzögerung dritter Art wird ebenfalls in Abhängigkeit wenigstens eines Bremsdrucks gebildet. Vorgesehen ist weiterhin die Fahrzeuggeschwindigkeit im zweiten Radzustand in Abhängigkeit von der Fahrzeugverzögerung dritter Art und dem Vergleich der Fahrzeugverzögerung erster und zweiter Art im ersten Radzustand zu bilden.

Vorteilhafterweise wird die Fahrzeugverzögerung zweiter und dritter Art auf die gleiche vorgebbare Weise erfasst. Dabei ist insbesondere vorgesehen, die Fahrzeugverzögerung zweiter und dritter Art in Abhängigkeit von wenigstens einem Bremsdruck einer Radbremse und/oder einem Reibwert zwischen Bremsbelag und Bremsscheibe und/oder der Fahrzeugmasse und/oder einem bauartbedingten Radparameter zu erfassen.

Die Bestimmung der Fahrzeuggeschwindigkeit wird in einer weiteren Ausgestaltung der Erfindung vorteilhafterweise in regelmäßigen Zeitintervallen und in Abhängigkeit von einer in einem vorherigen Zeitintervall bestimmten Fahrzeuggeschwindigkeit bestimmt. Daraus resultiert, dass eine erneute Geschwindigkeitsermittlung eine Änderung des bisherigen Geschwindigkeitswertes erzeugt.

Erfindungsgemäß ist die Interpretation des ersten Radzustands als eine Stabilitätsphase und der zweite Radzustand als eine Instabilitätsphase, beispielsweise während des Betriebs des Bremssystems während einer ABS-Bremsung. Da im Regelfall die Geschwindigkeit des Fahrzeugs anhand der Geschwindigkeit des schnellsten Rades gebildet wird, kann es vorkommen, dass während einer Instabilitätsphase einer ABS-Bremsung die Geschwindigkeit des schnellsten Rades sehr weit von der Geschwindigkeit des Fahrzeugs entfernt ist, da die Verzögerung der gebremsten Räder sehr hoch und somit nicht zu vernachlässigen sind. Diese Abweichung von der tatsächlichen Fahrzeuggeschwindigkeit wird vorteilhafterweise durch die Erfindung kompensiert.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in den Zeichnungen dargestellten Ausführungsformen erläutert. Dabei stellt Figur 1 in einem Blockdiagramm schematisch die Ermittlung der Fahrzeuggeschwindigkeit dar. Figur 2 zeigt in einem Flussdiagramm den Ablauf bei der Ermittlung der Fahrzeuggeschwindigkeit. Die Figuren 3a und 3b zeigen schematisch die an den Rädern anliegenden Kräfte. Mit der Figur 4 wird ein typischer Geschwindigkeitsverlauf eines Rades während einer ABS-Bremsung gezeigt.

Ausführungsbeispiel

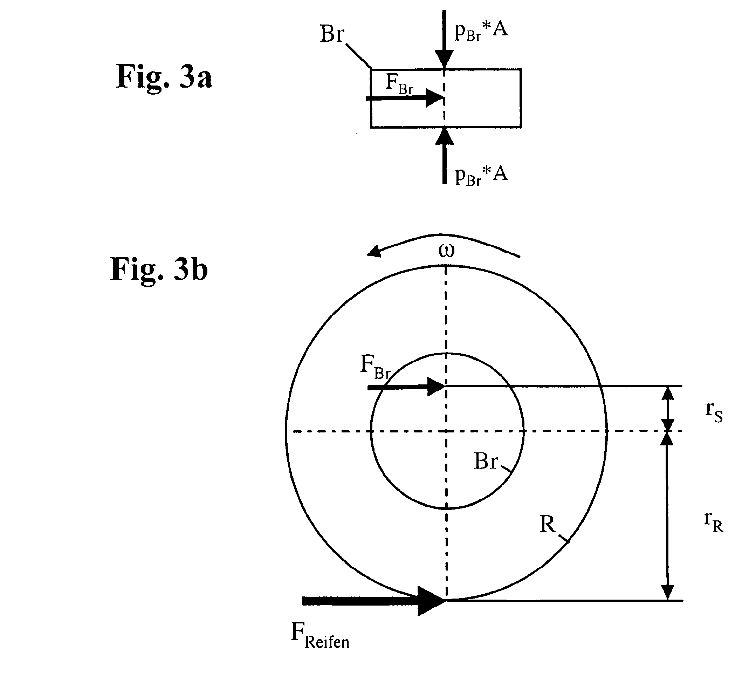

Zur Bestimmung der Fahrzeugverzögerung und damit der Fahrzeuggeschwindigkeit aus den Bremsdrücken an den Rädern werden die Kräfte und Momente berücksichtigt, die physikalisch am Reifen angreifen. Mit ihrer Hilfe wird eine Differentialgleichung für die Rotation eines Rades aufgestellt. Dazu wird allgemein gemäß Figur 3a und 3b ein Drallsatz zur Konvertierung des Bremsdrucks in eine Verzögerung $a_{Fzg}$ für ein nicht angetriebenes Rad ermittelt. Die Summe aller angreifenden Momente resultiert in einer Änderung des Bewegungszustandes (Beschleunigung) des Rades:

$$\Theta_{Rad}\ d\omega/dt = -F_{Rollreib}\ r_R - F_{Br}\ r_S + F_{Reifen}\ r_R \qquad (1)$$

mit

| | |
|---|---|
| $\Theta_{Rad}$ | Trägheitsmoment des Rades |
| $d\omega m/dt$ | Winkelbeschleunigung des Rades |
| $F_{Rollreib}$ | Rollreibungskraft |
| $F_{Br}$ | Bremskraft der Bremsscheibe |
| $F_{Reifen}$ | Reifenkraft (Indiz für die Verzögerung des Rades) |
| $r_R$ | Dynamischer Radhalbmesser |
| $r_S$ | Abstand des Kraftangriffpunktes von der Radrotationsachse des Rades |

Die Reifenkraft wird so angenommen, dass bei fehlender Bremskraft das Moment aus der Reifenkraft mit dem Trägheitsterm ($\Theta_{Rad}$ * $d\omega/dt$) im Gleichgewicht steht. Eine positive Reifenkraft führt daher zu einer positiven Beschleunigung des Rades. Die Produkte ($\Theta_{Rad}$ * $d\omega/dt$), sowie ($F_{Rollreib}$ * $r_R$) werden vernachlässigt, so dass sich folgende Gleichung ergibt:

$$0 = -F_{Br}\, r_S + F_{Reifen}\, r_R. \qquad (2)$$

Bei ABS-Regelung wird das Blockieren des Rades verhindert bzw. es wird versucht, mit der größtmöglichen Längskraft das Fahrzeug maximal zu verzögern. Die Radbremsdrücke werden entsprechend so eingestellt, dass dieses Maximum erreicht wird. Daher spiegelt in diesem Fall die Reifenkraft ($F_{Reifen}$), welche aus der Bremskraft ($F_{Br}$) berechnet wird, die Längsverzögerung $a_{Fzg}^*$ wider.

$$F_{Reifen} = m_{Fzg}\, a_{Fzg}^{\bullet} \qquad (3)$$

Dabei beschreibt die Größe $m_{Fzg}$ die Fahrzeugmasse. Aus Gleichung 2 ergibt sich somit:

$$F_{Reifen} = F_{Br}\, r_s/r_R \qquad (4)$$

Für die Längsverzögerung erhält man dann aus Gleichung 3 und Gleichung 4:

$$a_{Fzg}^{\bullet} = F_{Br}\, r_s/(r_R\, m_{Fzg}) \qquad (5)$$

Die Bremskraft $F_{Br}$ zwischen Bremsbeläge (Bremssattel) und Bremsscheibe ergibt sich aus dem Bremsdruck $p_{Br}^*$, der kommulierten Bremskolbenfläche A und dem Reibwert $\mu_{Br}$ zwischen den Bremsbelägen und der Bremsscheibe.

$$F_{Br} = \mu_{Br}\, A\, p_{Br}^{\bullet} \qquad (6)$$

Aus Gleichung 5 und 6 ergibt sich die Längsverzögerung an einem Rad i zu

$$a_{Fzg}^{\bullet} = (\mu_{Br}\, A\, p_{Br}^{\bullet}\, r_s)/(r_R\, m_{Fzg}) \qquad (7)$$

Die Verzögerung $a_{Fzg}^*$ stellt die erreichte Verzögerung bei Betrachtung von nur einer Bremse mit Bremsdruck $p_{Br}^*$ dar. Daher wird nun durch die Betrachtung aller 4 Radbremsen die Verzögerung $a_{Fzg}$ ermittelt.

$$a_{Fzg} = (\mu_{Br}\, A\, p_{Br}\, r_s)/(r_R\, m_{Fzg}) \qquad (8)$$

Für die Radbremsdrücke $p_{Br,i}$ gilt:

$$p_{Br} = p_{Br,vl} + p_{Br,vr} + p_{Br,hl} + p_{Br,hr} = \sum_i p_{Br,i} \qquad \text{mit } i = 1,\dots,4 \qquad (9)$$

mit

vl =    vorne links
vr =    vorne rechts
hl=    hinten links
hr =    hinten rechts
i =    Laufindex

Durch Gleichung 8 kann somit ein Zusammenhang zwischen den Radbremsdrücken und der Verzögerung des Fahrzeugs aufgezeigt werden.

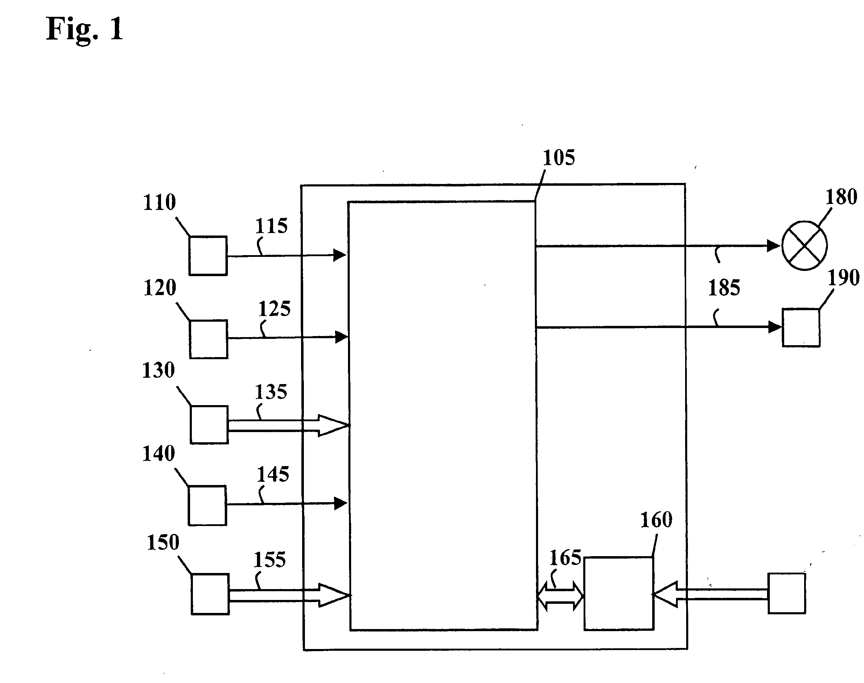

Das Blockschaltbild in Figur 1 zeigt schematisch die Ermittlung der Fahrzeuggeschwindigkeit während eines Bremsvorgangs. Dazu wird in Block 105 durch ein Flag $F_B$ (115) von der Bremsanlage 110 abgefragt, ob ein Bremsvorgang stattfindet, wobei ein gesetztes Flag $F_B$, d.h. $F_B = 1$ dem vorliegen eines Bremsvorgangs entspricht. Dabei spielt es keine Rolle, ob der Bremsvorgang von einem durch den Fahrer hervorgerufenen Bremswunsch oder durch ein automatisches Bremssystem erzeugt wurde. Weiterhin wird das im Fahrzeug befindliche automatische Bremssystem 120 auf seine Betriebszustände abgefragt. Im vorliegenden Ausführungsbeispiel wird dafür ein Antiblockiersystem (ABS) daraufhin abgefragt, ob sich wenigstens eines der Räder in einer Stabilitätsphase oder in einer Instabilitätsphase befindet. Dabei können die beiden Phasen beispielsweise durch das Verhalten des aufgewandten Bremsdrucks zur erreichten Bremskraft voneinander unterschieden werden. So repräsentiert eine Stabilitätsphase einen Bereich, bei dem durch Erhöhung des Bremsdrucks eine Steigerung der Bremskraft möglich ist, wohingegen in einer Instabilitätsphase dieser Zusammenhang zwischen Erhöhung des Bremsdruck und der Bremskraft nicht zu erkennen ist.

Angezeigt wird der unterschiedliche Rad- bzw. Betriebszustand durch ein Flag $F_s$ (125). Dabei entspricht ein gesetztes Flag $F_s$, d.h. $F_s = 1$ der Stabilitätsphase. Zur Ermittlung der Fahrzeuggeschwindigkeit ist weiterhin die Aufnahme der Radbremsdrücke an den für die Ermittlung der Fahrzeuggeschwindigkeit relevanten Radbremsen nötig. Da sich das Referenzrad, welches zur Fahrgeschwindigkeitsermittlung herangezogen wird, während des Fahrzeugbetriebs ändern kann, werden sämtliche Radbremsdruckgrößen $p_{Br,i}$ (135) an den Radbremsen 130 des Fahrzeugs aufgenommen und in den Block 105 eingelesen. Falls das Fahrzeug mit einem Gewichtssensor 140 ausgestattet ist, der das aktuelle Gewicht des Fahrzeugs $m_{Fzg}$ (145) feststellen kann, so wird diese Information ebenfalls in den Block 105 eingelesen. Darüber hinaus besteht jedoch auch die Möglichkeit, das Gewicht des Fahrzeugs anhand einer Schätzung beispielsweise durch eine Berechnung mit Hilfe von erfassbaren Betriebsparametern des Fahrzeugs wie Fahrzeughöhe über dem Untergrund, Fahrverhalten während Beschleunigungen oder Radaufstandskräften in einem Block 140 oder direkt im Block 105 zu ermitteln. Mit einem System 150, welches den Kraftschluss zwischen Bremsbelag und Bremsscheibe erfasst, können vorteilhafterweise die Kraftschlüsse $\mu_{Br,i}$ (155) aller Räder i aufgenommen werden, wenn das Fahrzeug mit einem entsprechenden System ausgestattet ist.

Im internen Speicher 160 werden die individuellen Radparameter bzw. diejenigen Parameter, die zur Ermittlung der Fahrzeuggeschwindigkeit notwendig sind, abgespeichert. Dabei handelt es sich beispielsweise, wie in der Figur 3a und 3b dargestellt, um den dynamischen Radhalbmesser $r_R$, den Abstand des Kraftangriffspunktes von der Rotationsachse des Rades $r_s$ sowie die Bremskolbenfläche A. Daneben kann jedoch auch die Fahrzeugmasse $m_{Fzg}$ abgespeichert werden, wenn kein aktueller Wert 145 durch einen Gewichtssensor 140 oder einer entsprechenden Gewichtsschätzung bzw. -berechnung zur Verfügung gestellt werden kann. Die Daten des Speichers 160 können beispielsweise durch einen Servicetechniker aktualisiert werden, wenn eine entsprechende Änderung am Fahrzeug vorgenommen wurde. Denkbar ist hierbei eine Änderung der verwendeten Reifen durch einen Reifenwechsel.

Bei erfolgreicher Ermittlung der Fahrzeugverzögerung bzw. der Fahrzeuggeschwindigkeit 185 kann der entsprechende Wert an die Anzeige 180 weitergegeben werden. Eine übliche Anzeige für die Fahrzeuggeschwindigkeit in Fahrzeugen stellt hierbei ein Tachometer dar, wobei auch andere optische und akustische Formen der Geschwindigkeitsmitteilung an den Fahrer denkbar sind. Neben der Anzeige der Fahrzeuggeschwindigkeit für den Fahrer kann der genaue Wert der Fahrzeuggeschwindigkeit jedoch auch für einige Fahrzeugsysteme zur Steuerung und Regelung der Stabilität des Fahrzeugs von Vorteil sein. So ist beispielsweise denkbar, die Geschwindigkeit im Rahmen einer Fahrdynamikregelung (FDR) oder eines Adaptive Cruise Control (ACC) zu verwenden. Zur Vereinfachung sind diese Systeme im Block 190 zusammengefasst.

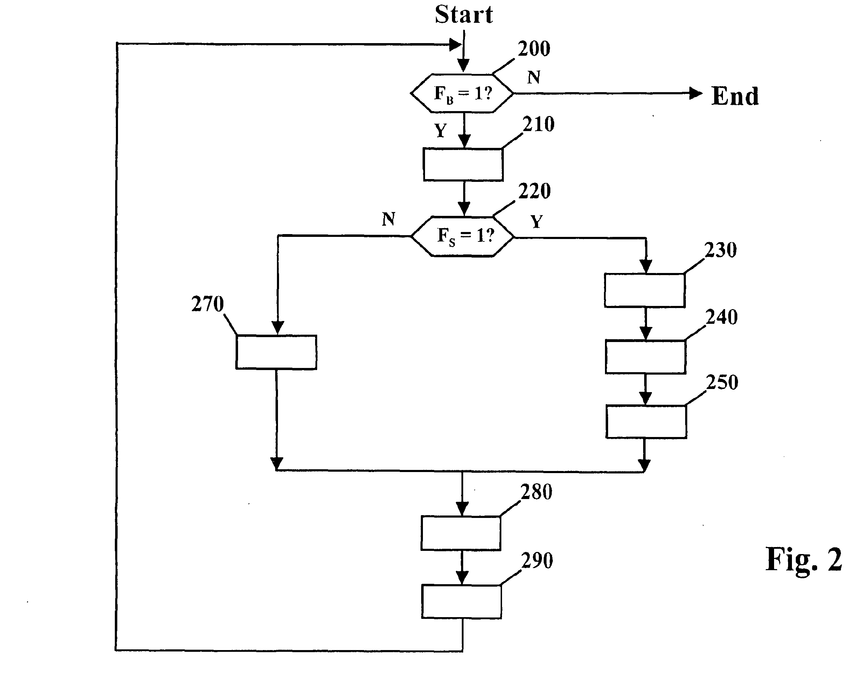

Der Algorithmus in Figur 2 zeigt den Flussverlauf eines Programms, mit dem die Fahrzeuggeschwindigkeit in Abhängigkeit von wenigstens einem Bremsdruck einer Radbremse bestimmt werden kann. Nach dem Start des Programms wird in Schritt 200 abgefragt, ob ein Bremsvorgang zum momentanen Zeitpunkt vorliegt. Dies geschieht dadurch, dass das Flag $F_B$ eingelesen und daraufhin untersucht wird, ob es gesetzt ($F_B = 1$) ist. Ist dies nicht der Fall, so wird das Programm beendet. Wird jedoch ein gesetztes Flag $F_B$(115) und somit ein aktueller Bremsvorgang festgestellt, so werden im nächsten Schritt 210 verschiedene Parameter eingelesen, die zu einer Bestimmung der Fahrzeugverzögerung bzw. Fahrzeuggeschwindigkeit notwendig sind. Als Radparameter werden so die Werte $r_S$, $r_K$, A und die Raddrücke $p_{Br,i}$ eingelesen. Daneben wird die Haftreibungszahl $\mu_i$ am Rad i zwischen Rad und Fahrbahn bei Vorhandensein eines entsprechenden Systems 150 aktuell eingelesen. Ist ein Gewichtsensor 140 oder eine Gewichtsschätzung bzw. -berechnung im Fahrzeug vorhanden, so kann der dazugehörige aktuelle Gewichtswert $m_{Fzg}$ (145) ebenfalls eingelesen werden. Sind die aktuellen Werte $m_{Fzg}$ und/oder $\mu_i$ jedoch nicht individuell erfassbar, so reicht ein einmaliges Einlesen von gemittelten Werten dieser Parameter im Schritt 210 aus dem Speicher 160 für die weitere Bestimmung der Fahrzeugverzögerung bzw. Fahrzeuggeschwindigkeit aus. Neben den Radparametem wird aus dem Speicher 160. ein Korrekturfaktor K eingelesen, der nach dem ersten Durchlaufen einer Stabilitätsphase zur Verfügung steht. Dieser Korrekturfaktor K repräsentiert einen Faktor, der zur Berechnung der Fahrzeuggeschwindigkeit notwendig ist, falls einer oder mehrere der Parameter $m_{Fzg}$, $\mu_i$, A, $r_S$ oder $r_R$ nicht explizit vorliegt bzw. nicht aktuell bestimmt werden kann.

Zum Erkennen des Betriebszustands des Bremssystems wird im Schritt 220 das Flag $F_s$ (125) abgefragt. Dieses Flag $F_s$ (125) zeigt, wie schon erwähnt, an, ob es sich bei dem festgestellten Bremsvorgang ($F_B$ = 1) um eine Stabilitätsphase oder eine Instabilitätsphase handelt. Dabei bedeutet ein gesetztes Flag $F_s$ (125), dass wenigstens eines der Räder, insbesondere das schnellste Rad, sich in einer Stabilitätsphase befindet. Nach der Feststellung des ersten Betriebszustandes des Bremssystems, d.h. einer Stabilitätsphase, wird in Schritt 230 die Geschwindigkeit $v_0$ des schnellsten Rades bestimmt. Weiterhin wird in einem kurzen Zeitraum $\Delta t$ die Geschwindigkeitsdifferenz $\Delta v$ bestimmt. Aus $\Delta v$ und $\Delta t$ lässt sich gemäß

$$a_{Des} = \Delta v \, / \, \Delta t \qquad (10)$$

eine Fahrzeugverzögerung $a_{Des}$ ermitteln, die der tatsächlichen Verzögerung des Fahrzeugs entspricht. Im nachfolgenden Schritt 240 wird gemäß

$$a_{Fzg} = (\mu_{Br} \, A \, r_S \, p_{Br}) \, / \, (r_R \, m_{Fzg}) \qquad (11)$$

eine Fahrzeugverzögerung ermittelt, die in Abhängigkeit von wenigstens einem Radbremsdruck einer Radbremse gebildet wird. Da bei der Bestimmung der Fahrzeugverzögerung $a_{Fzg}$ nach Gleichung 11 einige Parameter nötig sind, die bei Nichtvorhandensein entsprechender Sensoren, wie beispielsweise einem Gewichtssensor 140 oder einem System 150 zur Ermittlung des Kraftschlusses, normalerweise nicht aktuell bestimmt werden können ($\mu_{Br}$, $m_{Fzg}$, A), wird im Schritt 250 ein Vergleich zwischen der tatsächlich aufgetretenen Fahrzeugverzögerung $a_{Des}$ und der in Abhängigkeit der Radbremsdrücke ermittelten Fahrzeugverzögerung $a_{Fzg}$ gemäß

$$K = a_{Des} \, / \, a_{Fzg} \qquad (12)$$

durchgeführt. Der Korrekturfaktor K repräsentiert dabei die nicht aktuell erfassbaren oder im Speicher explizit abgelegten Parameter wie die Haftreibungszahl $\mu_{Br}$, die Fahrzeugmasse $m_{Fzg}$ sowie der kumulierten Bremskolbenfläche A. Für die spätere Ermittlung der Fahrzeugverzögerung bzw. Fahrzeuggeschwindigkeit in der Instabilitätsphase wird der Korrekturfaktor im Speicher 160 abgelegt. Sind die erwähnten Parameter ($\mu_{Br}$, $m_{Fzg}$, A) jedoch aktuell bestimmbar oder als Mittelwerte im Speicher 160 abgelegt, so kann die weitere Bestimmung der Fahrzeugverzögerung ohne weitere Korrekturschritte mit Gleichung 11 durchgeführt werden.

Wird in Schritt 220 keine Stabilitätsphase festgestellt ($F_s$=0), so wird in Schritt 270 analog zum Schritt 240 die Fahrzeugverzögerung $a_{Fzg}$ in Abhängigkeit der Bremsdrücke $p_{Br,i}$ (135) ermittelt. Im Schritt 280 wird daraufhin die Fahrzeuggeschwindigkeit gemäß

$$v_n = v_{n-1} + a_{Fzg} \, K \, (t_n - t_{n-1}) \qquad (13)$$

als Änderung der Fahrzeuggeschwindigkeit ermittelt. Als Ausgangswert der Geschwindigkeit steht mit $v_0$ ein Fahrzeuggeschwindigkeitswert aus der Stabilitätsphase zur Verfügung. Ausgehend von dem Index-Startwert n=0 erhöht sich bei jeder Fahrzeuggeschwindigkeitsermittlung in der Instabilitätsphase der Index n um 1. Mit Gleichung 13 folgt daraus eine Modifikation der Fahrzeuggeschwindigkeit mit einer Berücksichtigung des vorhergehenden Fahrzeuggeschwindigkeitswertes. Dabei bezeichnen die beiden Zeiten $t_n$ und $t_{n-1}$ jeweils Zeitpunkte, an denen die aktuelle Fahrzeuggeschwindigkeit bzw. die letzte Fahrzeuggeschwindigkeit ermittelt wurde. Die so ermittelte Fahrzeuggeschwindigkeit 185 während einer Instabilitätsphase kann im Schritt 290 an eine entsprechende Anzeige, z.B. ein Tachometer, oder an geeignete Fahrzeugsysteme 190 zur Weiterverarbeitung weitergeleitet werden. Nach der Anzeige der Fahrzeuggeschwindigkeit beginnt das Programm erneut mit Schritt 200, bis der Bremsvorgang beendet ist.

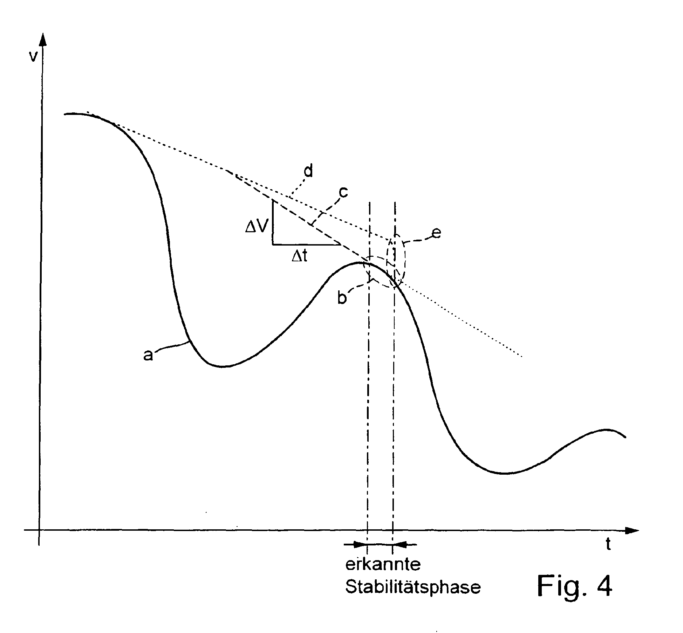

Zur Verdeutlichung der Ermittlung der Fahrzeugverzögerung bzw. Fahrzeuggeschwindigkeit ist in Figur 4 der zeitliche Verlauf einer ABS-Bremsung anhand einer Kurve a dargestellt. Kernpunkt der Erfindung ist die Detektierung eines stabilen Rades im Bereich b. Ein solches Rad hebt sich von den restlichen Rädern dadurch ab, dass es eine höhere Geschwindigkeit und wenig Dynamik aufweist. In dieser Phase erscheint die tatsächliche Verzögerung $a_{Des}$ des Fahrzeugs im Bereich c. Demgegenüber wird für die gemittelte Verzögerung in der Instabilitätsphase gemäß Gleichung 11 ausgehend von der vorherigen Stabilitätsphase eine Fahrzeuggeschwindigkeit gemäß d bestimmt. Durch den Vergleich der tatsächlichen Verzögerungen in der Stabilitätsphase mit der ermittelten Verzögerung nach Gleichung 11 erhält man den Korrekturfaktor K, mit dem die Fahrzeuggeschwindigkeit im Bereich e modifiziert werden kann.

Bezugszeichenliste

| | |
|---|---|
| Br | Bremsscheibe |
| R | Rad |
| $F_{Rollreib}$ | Rollreibungskraft |
| $F_{Br}$ | Bremskraft der Bremsscheibe |
| $F_{Reifen}$ | Reifenkraft (Indiz für die Verzögerung des Rades) |
| $r_R$ | Dynamischer Radhalbmesser |
| $r_S$ | Abstand des Kraftangriffpunktes von der Radrotationsachse des Rades |
| $p_{Br}$ | Bremsdruck |
| $F_B$ | Flag, das einen Bremsvorgang anzeigt |
| $F_S$ | Flag, das eine Stabilitätsphase anzeigt |
| $P_{Br,i}$ | Bremsdruck am Rad i |
| $m_{Fhz}$ | Fahrzeugmasse |
| $a_{Des}$ | tatsächliche Verzögerung des Fahrzeugs |
| $a_{Fzg}^{*}$ | Fahrzeugverzögerung am Rad i |
| $a_{Fzg}$ | gemittelte Fahrzeugverzögerung |
| $\mu_i$ | Haftreibungszahl zwischen Rad und Fahrbahn am Rad i |
| K | Korrekturfaktor |
| 110 | Bremsanlage |
| 120 | Automatisches Bremssystem (ABS, ESP, o.ä.) |
| 130 | Radbremsen |
| 140 | Sensor zur Erfassung der Fahrzeugmasse |
| 150 | Sensor zur Aufnahme des Kraftschlusses zwischen Rad und Fahrbahn |
| 160 | Interner Speicher |
| 180 | Anzeige der Fahrzeuggeschwindigkeit |
| 190 | Systeme, die die Fahrstabilität während des Betriebs sichern |

## Patentansprüche

**1.** Verfahren zur Ermittlung einer die Längsbewegung eines Fahrzeugs repräsentierenden Bewegungsgröße (185), wobei das Fahrzeug mit einem Antiblockiersystem (110) ausgestattet ist und während des Betriebs des Antiblockiersystems (110) wenigstens

- eine Stabilitätsphase und
- eine Instabilitätsphase

wenigstens eines Rades erkannt wird,
wobei vorgesehen ist, dass die Stabilitätsphase erkannt wird, wenn eine Erhöhung des Bremsdrucks zu einer Steigerung der Bremskraft führt und eine Instabilitätsphase erkannt wird, wenn eine Steigerung der Bremskraft durch eine Erhöhung des Breinsdrucks nicht möglich ist, wobei in einem ersten Schritt eine erste die Längsbewegung des Fahrzeugs repräsentierende Bewegungsgröße in der Stabilitätsphase ermittelt wird, und wobei in einem zweiten Schritt eine zweite die Längsbewegung des Fahrzeugs repräsentierende Bewegungsgröße in der Instabilitätsphase in Abhängigkeit von der ersten Bewegungsgröße ermittelt wird.

2. Verfahren nach Anspruch 1, **dadurch gekennzeichnet, dass** in der Stabilitätsphase ein Korrekturfaktor (K) ermittelt wird, der das Verhältnis einer tatsächlichen Fahrzeugverzögerung zu einer berechneten Fahrzeugverzögerung darstellt.

3. Verfahren nach Anspruch 1 oder 2, **dadurch gekennzeichnet, dass** die Bewegungsgröße eine Fahrzeuggeschwindigkeitsgröße oder eine Fahrzeugverzögerungsgröße darstellt.

4. Verfahren nach Anspruch 3, **dadurch gekennzeichnet, dass** die zweite Fahrzeuggeschwindigkeitsgröße ausgehend von der ersten Fahrzeuggeschwindigkeitsgröße berechnet wird, wobei die Änderung der Fahrzeuggeschwindigkeit ($a_{Fhz}$) berücksichtigt wird, insbesondere in Abhängigkeit von dem Korrekturfaktor (K).

5. Verfahren nach Anspruch 4, **dadurch gekennzeichnet, dass** die Änderung der Fahrzeuggeschwindigkeit in Abhängigkeit von wenigstens

   - einem Bremsdruck (135) einer Radbremse (130), und/oder
   - einem Reibwert zwischen Bremsbelag und Bremsscheibe, und/oder
   - der Fahrzeugmasse, und/oder
   - einem bauartbedingten Radparameter erfasst wird.

6. Vorrichtung zur Ermittlung einer die Längsbewegung eines Fahrzeugs repräsentierenden Bewegungsgröße (185), wobei das Fahrzeug mit einem Antiblockiersystem (110) ausgestattet ist und während des Betriebs des Antiblockiersystems (110) wenigstens

   - eine Stabilitätsphase und
   - eine Instabilitätsphase

wenigstens eines Rades erkannt wird,
wobei eine Stabilitätsphase erkannt wird, wenn eine Erhöhung des Bremsdrucks zu einer Steigerung der Bremskraft führt und eine Instabilitätsphase erkannt wird, wenn eine Steigerung der Bremskraft durch eine Erhöhung des Bremsdrucks nicht möglich ist, ,
wobei ein Mittel (105) zur Ermittlung einer erste die Längsbewegung des Fahrzeugs repräsentierende Bewegungsgröße in der Stabilitätsphase vorgesehen sind, und wobei das Mittel (105) eine zweite die Längsbewegung des Fahrzeugs repräsentierende Bewegungsgröße in der Instabilitätsphase in Abhängigkeit von der ersten Bewegungsgröße ermittelt.

7. Vorrichtung nach Anspruch 6, **dadurch gekennzeichnet, dass** das Mittel (105) in der Stabilitätsphase einen Korrekturfaktor (K) ermittelt, der das Verhältnis einer tatsächlichen Fahrzeugverzögerung zu einer berechneten Fahrzeugverzögerung darstellt.

8. Vorrichtung nach Anspruch 6 oder 7, **dadurch gekennzeichnet, dass** das Mittel eine Fahrzeuggeschwindigkeitsgröße oder eine Fahrzeugverzögerungsgröße ermittelt.

9. Vorrichtung nach Anspruch 8, **dadurch gekennzeichnet, dass** das Mittel (105) die zweite Fahrzeuggeschwindigkeitsgröße ausgehend von der ersten Fahrzeuggeschwindigkeitsgröße berechnet, wobei die Änderung der Fahrzeuggeschwindigkeit ($a_{Fhz}$) berücksichtigt wird, insbesondere in Abhängigkeit von dem Korrekturfaktor (K).

10. Vorrichtung nach Anspruch 9, **dadurch gekennzeichnet, dass** die Änderung der Fahrzeuggeschwindigkeit in Abhängigkeit von wenigstens

   - einem Bremsdruck (135) einer Radbremse (130), und/oder
   - einem Reibwert zwischen Bremsbelag und Bremsscheibe, und/oder
   - der Fahrzeugmasse, und/oder
   - einem bauartbedingten Radparameter
   erfasst wird.

## Claims

1. Method for determining a movement variable (185) which represents the longitudinal movement of a vehicle, wherein the vehicle is equipped with an anti-lock brake system (110), and during the operation of the anti-lock brake system (110) at least

   - one stability phase and
   - one instability phase

   of at least one wheel are detected,
   wherein there is provision for the stability phase to be detected if a rise in the brake pressure leads to an increase in the braking force, and an instability phase is detected if it is not possible to increase the braking force by raising the brake pressure,
   wherein in a first step a first movement variable which represents the longitudinal movement of the vehicle is determined in the stability phase, and wherein in a second step a second movement variable which represents the longitudinal movement of the vehicle is determined in the instability phase on the basis of the first movement variable.

2. Method according to Claim 1, **characterized in that** in the stability phase a correction factor (K) which represents the ratio of an actual vehicle deceleration to a calculated vehicle deceleration is determined.

3. Method according to Claim 1 or 2, **characterized in that** the movement variable represents a vehicle velocity variable or a vehicle deceleration variable.

4. Method according to Claim 3, **characterized in that** the second vehicle velocity variable is calculated on the basis of the first vehicle velocity variable, wherein the change in the vehicle velocity ($a_{Fhz}$) is taken into account, in particular on the basis of the correction factor (K).

5. Method according to Claim 4, **characterized in that** the change in the vehicle velocity is detected on the basis of at least

   - a brake pressure (135) of a wheel brake (130), and/or
   - a coefficient of friction between a brake lining and a brake disc, and/or
   - the mass of the vehicle and/or
   - a design-related wheel parameter.

6. Device for determining a movement variable (185) which represents the longitudinal movement of a vehicle, wherein the vehicle is equipped with an anti-lock brake system (110), and during the operation of the anti-lock brake system (110) at least

   - one stability phase and
   - one instability phase

   of at least one wheel are detected,
   wherein a stability phase is detected if a rise in the brake pressure leads to an increase in the braking force and an instability phase is detected if it is not possible to increase the braking force by raising the brake pressure,
   wherein a means (105) for determining a first movement variable which represents the longitudinal movement of the vehicle is provided in the stability phase, and wherein the means (105) determines a second movement variable which represents the longitudinal movement of the vehicle in the instability phase on the basis of the first movement variable.

7. Device according to Claim 6, **characterized in that** the means (105) determines, in the stability phase, a correction factor (K) which represents the ratio of an actual vehicle deceleration to a calculated vehicle deceleration.

8. Device according to Claim 6 or 7, **characterized in that** the means determines a vehicle velocity variable or a vehicle deceleration variable.

9. Device according to Claim 8, **characterized in that** the means (105) calculates the second vehicle velocity variable on the basis of the first vehicle velocity variable, wherein the change in the vehicle velocity ($a_{Fhz}$) is taken into account, in particular on the basis of the correction factor (K).

**10.** Device according to Claim 9, **characterized in that** the change in the vehicle velocity is detected on the basis of at least

- one brake pressure (135) of a wheel brake (130) and/or
- one coefficient of friction between the brake lining and the brake disc, and/or
- the mass of the vehicle and/or
- a design-related wheel parameter.

**Revendications**

**1.** Procédé de détermination d'une grandeur de déplacement (185) qui représente le déplacement longitudinal d'un véhicule,
le véhicule étant équipé d'un système antiblocage (110) et
lorsque le système antiblocage (110) est en fonctionnement, au moins
une phase de stabilité et
une phase d'instabilité
d'au moins une roue sont détectées,
le procédé prévoyant de détecter la phase de stabilité lorsqu'une augmentation de la pression de freinage entraîne une augmentation de la force de freinage et de détecter une phase d'instabilité lorsqu'une augmentation de la pression de freinage ne permet pas d'obtenir une augmentation de la force de freinage,
une première grandeur de déplacement qui représente le déplacement longitudinal du véhicule étant déterminée dans une première étape dans la phase de stabilité et
une deuxième grandeur de déplacement qui représente le déplacement longitudinal du véhicule étant déterminée dans la phase d'instabilité au cours d'une deuxième étape en fonction de la première grandeur de déplacement.

**2.** Procédé selon la revendication 1, **caractérisé en ce que** dans la phase de stabilité, un facteur de correction (K) qui représente le rapport entre un ralentissement effectif du véhicule et un ralentissement calculé du véhicule est déterminé dans la phase de stabilité.

**3.** Procédé selon la revendication 1 ou 2, **caractérisé en ce que** la grandeur de déplacement représente une grandeur de vitesse du véhicule ou une grandeur de ralentissement du véhicule.

**4.** Procédé selon la revendication 3, **caractérisé en ce que** la deuxième grandeur de vitesse du véhicule est calculée à partir de la première grandeur de vitesse du véhicule, la modification de la vitesse du véhicule ($a_{Fhz}$) étant prise en compte, en particulier en fonction du facteur de correction (K).

**5.** Procédé selon la revendication 4, **caractérisé en ce que** la modification de la vitesse du véhicule est détectée en fonction d'au moins

- une pression de freinage (135) sur un frein de roue (130), et/ou
- une valeur de frottement entre la garniture de frein et le disque de frein, et/ou
- la masse du véhicule et/ou
- un paramètre de roue qui dépend du type de celle-ci.

**6.** Dispositif de détermination d'une grandeur de déplacement (185) qui représente le déplacement longitudinal d'un véhicule,
le véhicule étant équipé d'un système antiblocage (110) et
lorsque le système antiblocage (110) est en fonctionnement, au moins
une phase de stabilité et
une phase d'instabilité
d'au moins une roue sont détectées,
une phase de stabilité étant détectée lorsqu'une augmentation de la pression de freinage entraîne une augmentation de la force de freinage et une phase d'instabilité étant détectée lorsqu'une augmentation de la pression de freinage ne permet pas d'obtenir une augmentation de la force de freinage,
un moyen (105) de détermination d'une première grandeur de déplacement qui représente le déplacement longitudinal du véhicule dans la phase de stabilité étant prévu et
le moyen (105) déterminant une deuxième grandeur de déplacement qui représente le déplacement longitudinal du véhicule dans la phase d'instabilité, en fonction de la première grandeur de déplacement.

7. Dispositif selon la revendication 6, **caractérisé en ce que** dans la phase de stabilité, le moyen (105) détermine un facteur de correction (K) qui représente le rapport entre un ralentissement effectif du véhicule et un ralentissement calculé du véhicule.

8. Dispositif selon la revendication 6 ou 7, **caractérisé en ce que** le moyen détermine une grandeur de vitesse du véhicule ou une grandeur de ralentissement du véhicule.

9. Dispositif selon la revendication 8, **caractérisé en ce que** le moyen (105) calcule la deuxième grandeur de vitesse du véhicule à partir de la première grandeur de vitesse du véhicule, la modification de la vitesse du véhicule ($a_{Fhz}$) étant prise en compte, en particulier en fonction du facteur de correction (K).

10. Dispositif selon la revendication 9, **caractérisé en ce que** la modification de la vitesse du véhicule est détectée en fonction d'au moins

   - une pression de freinage (135) sur un frein de roue (130), et/ou
   - une valeur de frottement entre la garniture de frein et le disque de frein, et/ou
   - la masse du véhicule et/ou
   - un paramètre de roue qui dépend du type de celle-ci.

# Fig. 1

EP 1 440 860 B1

Start

200 — $F_B = 1$?  N → End

Y

210

220 — $F_S = 1$?

N                    Y

270                  230

                     240

                     250

280

290

EP 1 440 860 B1

Fig. 2

Fig. 3a

Fig. 3b

Fig. 4

**IN DER BESCHREIBUNG AUFGEFÜHRTE DOKUMENTE**

**In der Beschreibung aufgeführte Patentdokumente**

- DE 19527531 C2
- DE 3833212 A1
- DE 2558712 A1
- DE 3909589 A1
- DE 19519767 A1
- DE 19805091 A1